(19) Europäisches Patentamt / European Patent Office / Office européen des brevets

(11) **EP 4 433 544 B1**

(12) **EUROPÄISCHE PATENTSCHRIFT**

(45) Veröffentlichungstag und Bekanntmachung des Hinweises auf die Patenterteilung:
**31.12.2025 Patentblatt 2026/01**

(21) Anmeldenummer: **22817605.3**

(22) Anmeldetag: **11.11.2022**

(51) Internationale Patentklassifikation (IPC):
**C08L 91/06** *(2006.01)* **D21H 17/60** *(2006.01)*
**D21H 19/18** *(2006.01)* **C09D 191/06** *(2006.01)*

(52) Gemeinsame Patentklassifikation (CPC):
**C08L 91/06; C09D 191/06; D21H 17/60;
D21H 19/18**

(86) Internationale Anmeldenummer:
**PCT/EP2022/081569**

(87) Internationale Veröffentlichungsnummer:
**WO 2023/088794 (25.05.2023 Gazette 2023/21)**

(54) **NATURWACHSOXIDATEMULSION MIT VERBESSERTEN BARRIEREEIGENSCHAFTEN**

NATURAL WAX OXIDATE EMULSION WITH IMPROVED BARRIER PROPERTY

ÉMULSION D'OXYDE DE CIRE NATURELLE À DES PROPRIÉTÉS BARRIÈRES AMÉLIORÉES

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorität: **19.11.2021 EP 21209400**

(43) Veröffentlichungstag der Anmeldung:
**25.09.2024 Patentblatt 2024/39**

(73) Patentinhaber: **CLARIANT INTERNATIONAL LTD
4132 Muttenz (CH)**

(72) Erfinder:
• **WUNDLECHNER, Milena
86690 Mertingen (DE)**
• **CAN ARAN, Halil
81249 Muenchen (DE)**
• **BODENDORFER, Simon
86152 Augsburg (DE)**
• **TRUE, Daniela
86863 Untermeitingen (DE)**

(74) Vertreter: **Clariant Produkte (Deutschland) GmbH
IPM Patent & License Management
Arabellastrasse 4a
81925 München (DE)**

(56) Entgegenhaltungen:
EP-A1- 3 808 819      WO-A1-2014/060082
DE-A1- 102014 001 709      US-A1- 2007 068 642

## Beschreibung

### Technisches Gebiet der Erfindung

Die Erfindung betrifft eine Naturwachsoxidat-Emulsion für die Ausildung einer Wasser(dampf)barriereschicht mit verbesserten Barriereeigenschaften, ein Verfahren zur Herstellung einer solchen Emulsion, sowie Artikel aus Zellulosefasern oder Biopolymeren, die mit einer solchen Naturwachsoxidat-Emulsion beschichtet wurden. Weiterhin betrifft die Erfindung die Verwendung einer solchen Emulsion zur Beschichtung von Substraten, die Zellulosefasern oder Biopolymere enthalten.

### Hintergrund der Erfindung

In der Nahrungsmittel- und Konsumgüterindustrie sowie für industrielle Waren werden Verpackungsmaterialien verschiedenster Art benötigt. Geht es um die Verpackung feuchteempfindlicher oder wasserhaltiger Güter, so ist es erforderlich, die Verpackung vor dem Durchfeuchten zu schützen. Hierfür werden entweder wasserundurchlässige Folien verwendet oder beschichtete zellulosehaltige Substrate, wie z.B. beschichtetes Papier oder beschichtete Pappe.

Zur Beschichtung der zellulosehaltigen Substrate eignen sich dünne, undurchlässige Polymerschichten oder wasserabweisende, wachshaltige Beschichtungen. Hier spielt auch die Wechselwirkung der Beschichtung und des zu verpackenden Objekts eine Rolle. So sollten für Lebensmittelverpackungen bevorzugt Verpackungsmaterialien verwendet werden, die keine gesundheitlich bedenklichen Stoffe, wie z.B. MOSH/MOAH aus den Erdölfraktionen, Phthalate, und andere Weichmacher enthalten. Aus diesem Grunde sind Beschichtungen aus natürlichen, nachwachsenden Wachsen besonders geeignet und wurden bereits vielfach in der Literatur beschrieben.

So beschreibt die EP3781485 eine Zusammensetzung zum Imprägnieren von Papier und Karton, die ein pflanzliches Wachs wie z.B. Zuckerrohrwachs und/oder Reiskleiewachs enthält. Die Zusammensetzung wird zu Pellets, die Zuckerrohrwachs und/oder Reiskleiewachs enthalten, geformt und kann mit entsprechenden Maschinen als Barriereschicht aufgebracht werden. Es wurde festgestellt, dass sowohl Zuckerrohrwachs als auch Reiskleiewachs, wenn sie allein auf Papier aufgetragen wurden, zunächst haften, sich aber nach längerer Einwirkung von heißem Wasser vom Papiersubstrat lösen. Weiterhin wurde beobachtet, dass eine wasserfeste Schicht, die aus einer Mischung von Zuckerrohrwachs und Reiskleiewachs besteht, über längere Zeiträume hinweg haftet und wasserfest bleibt, wenn sie heißem Wasser ausgesetzt wird.

Heinrich et al. beschreiben in Powder Technology 357 (2019) 223-231 die Wasserdampfbarriereeigenschaften von Bienenwachs, Candelillawachs, Reiswachs sowie Sonnenblumenwachs. Reiswachs zeigt hier die höchste Wasserdampfpermeabilität aller untersuchten Wachse und damit die schlechtesten Barriereeigenschaften.

Die WO2006137274 beschreibt eine Polymerzusammensetzung umfassend ein Reiskleiewachs, welche sich zur Herrstellung von bioabbaubaren Dünnsschichtbarrieren und diese umfassende Laminate eignet. Die Beschichtungszusammensetzung ist wasserfrei.

Den beschriebenen naturwachshaltigen Barrierebeschichtungen ist gemein, dass sie aus der Schmelze aufgetragen werden und somit besondere Apparaturen für die Beschichtungen benötigen. Desweiteren ist bei der Beschichtung der Eintrag von Wärmeenergie erforderlich, um die Zusammensetzungen in die Schmelze zu überführen, was den Auftrag der Barriereschicht energieintensiv macht.

Die WO2007/061592 beschreibt eine Zusammensetzung zur Verwendung bei der Herstellung von essbaren, biologisch abbaubaren Behältern, die unter anderem Wasser, vorgelatinierte und native Stärke und eine Wachsemulsion umfasst, wobei die Zusammensetzung im Wesentlichen aus Materialien in Lebensmittelqualität besteht.

Die bevorzugte Wachsemulsion ist eine stabile wässrige Emulsion, die normalerweise aus Carnauba-, Candelilla-, Reiskleie-, Paraffin- oder einem anderen lebensmitteltauglichen Wachs besteht. Bei den verwendeten Wachsen handelt es sich um gebleichte, aber nicht weiter oxidierte Wachse, d.h. die Säurezahl des gebleichten Wachses entspricht weitestgehend jener des rohen Wachses. Die Emulsion wird mit Hilfe von Emulgatoren hergestellt. Bevorzugte Beispiele für Wachsemulsionen, die sich für die Verwendung in der aus WO2007/061592 bekannten Formulierung eignen, sind emulgiertes Carnaubawachs und emulgiertes Candelillawachs. Als Emulgatoren sind alle für Lebensmittelanwendungen zugelassenen Emulgatoren genannt, insbesondere Sorbitanmonostearat, Polysorbat 60, Polysorbat 65, Polysorbat 80, lebensmitteltaugliche Gummis (z. B. Arabinogalactan, Carrageenan, Furcelleran, Xanthan), Stearylmonoglyceridylcitrat, Succistearin und hydroxyliertes Lecithin.

Die Wachsemulsion soll die Wasserbeständigkeit der Zusammensetzung erhöhen, dient aber nicht der Ausbildung einer Barriereschicht.

Die DE102014001709A offenbart eine wässrige Naturwachsoxidat-Emulsion mit einem kationischen Emulgator. Allerdings offenbart das Dokument keine wässrige Naturwachsoxidat-Emulsion mit einem anionischem oder mit einem nicht-ionischem Emulgator.

Das Dokument US2007068642A1 offenbart wachshaltige Emulsionen zur Beschichtung von Papiersubstraten oder Früchten. Bei den beschriebenen Wachsen "Palmwachs" und "Sojawachs" handelt es sich um teil- und vollständig gehärtete Öle, die durch Hydrierung der das Sojaöl bzw. Palmöl bildenden Triglyceride gewonnen werden. So wird ein Palm- oder Sojawachs durch Reduktion erhalten. Dabei werden die Doppelbindungen der ungesättigten Fettsäuren reduziert. Somit sind "Palm- und Sojawachs" chemisch gänzlich andere Stoffe als Naturwachsoxidate, die aus genuinen Naturwachsen und damit aus meist monovalenten Ester langkettiger Fettsäuren dargestellt werden.

Es besteht ein anhaltendes Bedürfnis nach naturwachshaltigen Beschichtungen, die sich ohne Wärmeeintrag auf ein polysaccharidhaltiges Substrat aufbringen lassen und dabei eine Barriereschicht gegen Wasser und Wasserdampf ausbilden. Darüber hinaus sind solche naturwachshaltigen Beschichtungen auch für wasser(dampf)durchlässige Kunststoffsubstrate geeignet und können auf wasser(dampf)durchlässigen Plastikfolien, wie z.B. Biopolymerfolien, insbesondere Polylactid (PLA)-Folien Anwendung finden. Die Barriereschicht sollte möglichst ohne Zusatz von Polymeren oder Filmbildnern auskommen, eine gute Haftung auf dem Substrat zeigen, dünn aufgetragen werden können und eine ausreichende Flexibilität aufweisen, um nicht brüchig oder porös zu werden, da dies die Barriereeigenschaften negativ beeinflussen würde.

## Gegenstand der Erfindung

Überraschenderweise wurde gefunden, dass eine wässerige Naturwachsoxidat-Emulsion umfassend (a) mindestens ein Naturwachsoxidat, welches ein Verhältnis von Säurezahl zu OH-Zahl größer gleich 1 aufweist und (b) mindestens einen anionischen oder nicht-ionischen Emulgator diese Aufgabe löst.

Eine solche Emulsion ist stabil und lässt sich damit problemlos auf ein polysaccharid- oder biopolymerhaltiges Substrat, bevorzugt auf ein zellulosehaltiges Substrat aufbringen und bildet dort eine homogene Schicht aus, die entsprechend haftet.

Als Emulgatoren werden Hilfsmittel zur Herstellung und Stabilisierung von Emulsionen bezeichnet, die dazu dienen, zwei nicht miteinander mischbare Flüssigkeiten, wie zum Beispiel Öl und Wasser, zu einem fein verteilten Gemisch, der sogenannten Emulsion, zu vermengen und diese zu stabilisieren. Ähnliches gilt für die Aufmischung von festen, nicht löslichen Stoffen in einer Flüssigkeit, um eine sogenannte Suspension zu stabilisieren. Diese Eigenschaft besitzen Moleküle mit phasenvermittelnden Eigenschaften, wie z.B. Tenside. Tenside enthalten gleichzeitig einen hydrophoben sowie einen hydrophilen Molekülanteil und sind dadurch in der Lage Mizellen um fein verteilte Tröpfchen oder Partikel (z.B. Wachspartikel) zu bilden und diese im Dispersionsmedium (z.B. Wasser) gegen Agglomeration und Absetzen zu stabilisieren. Hierbei werden nicht-ionische Tenside von ionischen Tensiden unterschieden. Erstere beinhalten Partialladungen, wohingegen bei ionischen Tensiden der polare Molekülanteil durch ein Ion dargestellt wird. Dementsprechend gibt es anionische, kationische und amphotere ionische Tenside.

Geeignete Naturwachsoxidate können in Wasser emulgiert werden, indem diese mit Wasser und einem speziell abgestimmten Emulgatorsystem unter Rühren bei Temperaturen über dem Schmelzpunkt des Wachses emulgiert und die so entstandene Emulsion dann unter Rühren abgekühlt wird. Die so erzeugte Wachssuspension wird im industriellen Sprachgebrauch als "Wachsemulsion" bezeichnet.

Hierbei können nicht-ionische, ionische oder eine Kombination der beiden Emulgatorsysteme zum Einsatz kommen. Ionische Emulgatoren können auch in-situ erzeugt werden, indem beispielsweise Wachs- oder Ölsäuren mit alkalischen Medien oder Aminen verseift werden.

In Naturwachsoxidat-Emulsionen eignen sich insbesondere anionische und nicht-ionische Emulgatoren, wie z.B. Genapol® oder Hostapur® Emulgatoren der Clariant International Ltd.

Ein weiterer Gegenstand der Erfindung ist ein Verfahren zur Herstellung einer solchen Emulsion und ihre Verwendung zur Herstellung beschichteter polysaccharid- oder biopolymerhaltiger Substrate.

Der Auftrag aus einer wässrigen Emulsion ist vorteilhaft, da diese zur Auftragung nicht erwärmt werden muss und eine dünnere und damit flexiblere Schicht aufgetragen werden kann. Das macht dieses Verfahren gegenüber den Beschichtungsverfahren aus dem Stand-der-Technik energetisch günstiger, bringt Vorteile hinsichtlich des Einsatzes von Ressourcen und erleichtert das Papierrecycling. Die aus der Emulsion aufgetragene Schicht weist eine sehr niedrige Wasserdampfpermeabilität auf und führt zu einer deutlich erniedrigten Wasseraufnahme des ansonsten hydrophilen Substrats. Außerdem ist die Schicht sehr homogen und nicht porös, was weiterhin zu einer guten Barrierewirkung führt.

## Detaillierte Beschreibung der Erfindung

Zur Darstellung des Naturwachsoxidats in der naturwachsoxidathaltigen Emulsion können beispielsweise alle bekannten Oxidationsverfahren angewendet werden, die auch das Naturwachs selbst oxidieren und damit die Säurezahl des Naturwachsoxidats, gemessen nach ISO 3681, um mindestens 5 mg KOH/g, bevorzugt mindestens 10 mg KOH/g im Vergleich zum Ausgangsmaterial (in der Regel das Naturwachs oder eine gebleichte Form des Naturwachses) erhöhen und nicht nur zur Bleichung des Wachses durch Oxidation der Verunreinigungen im Wachs führen. Zu diesen gehören die Oxidation mit Chromsäure, mit Chromschwefelsäure (Chromtrioxid und Schwefelsäure) sowie mit Dichromatsalzen, die thermische Oxidation mit Luftsauerstoff, die auch mit Hilfe eines Katalysators vollzogen werden kann, sowie alle Arten der elektrochemischen Oxidation.

Es sind insbesondere solche Naturwachseoxidate geeignet, die durch Oxidation aus aus genuien Naturwachsen hergestellt werden. Unter genuien Naturwachsen werden solche Naturwachse verstanden, die in der Rohstoffquelle bereits als Wachs vorliegen und chemisch nicht weiter umgesetzt werden müssen, um als Wachs zu gelten.

Bevorzugt sind Naturwachse, die aus monovalenten Estern langkettiger Fettsäuren gebildet werden.

Besonders bevorzugt sind Oxidate des Reiskleiewachses, des Maiswachses, des Zuckerrohrwachses, des Sonnenblumenwachses und des Carnaubauwachses. Besonders bevorzugt sind Oxidate des Reiskleiewachses und Maiswachses. Ganz besonders bevorzugt ist Reiskleiewachsoxidat.

Die Naturwachsoxidate weisen vorzugsweise eine Säurezahl, gemessen nach ISO 2114, zwischen 1 und 140 mg KOH/g, bevorzugt zwischen 15 und 140 mg KOH/g, besonders bevorzugt zwischen 30 und 140 mg KOH/g auf. Ganz besonders bevorzugt sind Säurezahlen zwischen 15 und 110 mg KOH/g oder zwischen 30 und 110 mg KOH/g. Diese Säurezahlbereiche werden durch die Oxidation allein erzielt und erfordern keinen weiteren Veresterungsschritt. Solche Naturwachsoxidate weisen einerseits ausreichend Polarität auf, um leichter in Wasser emulgierbar zu sein, sind aber andererseits noch nicht so polar, dass die Barriereschicht auf die Polarität zurückzuführende Fehlstellen in der Mikrostruktur der Barriereschicht aufweist, die die Barrierewirkung negativ beeinflussen.

In einer bevorzugten Ausführungsform besitzt das mindestens eine Naturwachsoxidat der erfindungsgemäßen Emulsion eine Verseifungszahl zwischen 30 und 200 mg KOH/g, bevorzugt zwischen 50 und 180 mg KOH/g, besonders bevorzugt zwischen 80 und 170 mg KOH/g, gemessen nach ISO 3681. Ganz besonders bevorzugt sind Verseifungszahlen zwischen zwischen 80 und 140 mg KOH/g.

Vorzugsweise besitzt das mindestens eine Naturwachsoxidat der erfindungsgemäßen Emulsion eine Hydroxyl-Zahl, gemessen nach DGF M-IV 6, kleiner 8 mg KOH/g, bevorzugt kleiner 5 mg KOH/g, die für homogenere Materialeigenschaften steht und damit zur Ausbildung einer homogeneren Barriereschicht mit weniger Fehlstellen in der Mikrostruktur führt.

In einer bevorzugten Ausführungsform, weist das Naturwachsoxidat eine Iodfarbzahl kleiner 20, bevorzugt kleiner 15 und besonders bevorzugt kleiner 10 auf, gemessen nach DIN 6162. Eine niedrige Iodfarbzahl steht für eine besonders helle Farbe des Wachses und das Wachs beeinflusst damit die Farbe des Substrats nicht negativ.

Vorzugsweise besitzt das mindestens eine Naturwachsoxidat in der erfindungsgemäßen Emulsion einen Tropfpunkt zwischen 65 und 110 °C, gemessen nach ISO 2176. Damit weist die resultierende Beschichtung eine gute Temperaturstabilität auf, ohne dass bei der Herstellung der Naturwachsemulsion zu viel Energie aufgewandt werden muss, um das Naturwachs zum Schmelzen zu bringen.

Um eine leichte Auftragbarkeit der wässrigen Naturwachs-Emulsion zu gewährleisten und die Barriereschicht möglichst dünn und homogen auszubilden, ist das Naturwachsoxidat zu 5 bis 50 Gew.-%, bevorzugt zu 10 bis 45 Gew.-%, besonders bevorzugt zu 15 bis 40 Gew.-%, ganz besonders bevorzugt zu 20 bis 35 Gew.-%, bezogen auf die Gesamtmasse der Emulsion, in der Emulsion enthalten.

In einer bevorzugten Ausführungsform handelt es sich bei dem mindestens einen Emulgator um einen anionischen oder nicht-ionischen Emulgator. Hydrophobe Wachse können besonders leicht mit Hilfe anionischer oder nicht-ionischer Emulgatoren emulgiert werden.

Anionische Emulgatoren weisen einen ammoniakalischen Geruch auf, durch den sich der Anwender möglicherweise beeinträchtigt fühlt. Beim Einsatz von nicht-ionischen Emulgatoren, bevorzugt Tensiden, kann dieser vermieden werden. Des weiteren besitzen anionische Emulsionen einen höheren pH-Wert, der sich in manchen Anwendungen ungünstig auswirkt. Somit sind für manchen Anwendungen, wie z.B. pH-sensitive Produkte oder Kosmetikprodukte, nicht-ionische Emulgatoren bevorzugt.

Die Beschaffenheit des nicht-ionischen Emulgators kann durch das Masse-Verhältnis zwischen dem polaren und dem unpolaren Teil eines Tensids dargestellt werden und wird über den HLB-Wert ("Hydrophil-Lipophil-Balance", das hydrophil-lipophile Verhältnis des Moleküls) definiert. Der Grad dieses hydrophil-lipophilen Verhältnisses kann durch Berechnung von Werten für die verschiedenen Bereiche des Moleküls bestimmt werden, wie von Griffin (vgl. z. B. Journal of the Society of Cosmetic Chemists, 5 (4), 249-256 (1954))beschrieben. Die Methode von Griffin wurde in erster Linie für nicht-ionische Tenside entwickelt, die Berechnung des HLB-Wertes ergibt sich nach folgender Formel:

$$HLB = 10 * Mh/M,$$

wobei Mh die Molekülmasse des hydrophilen Teils des Moleküls und M die Molekülmasse des gesamten Moleküls ist, was einen Wert auf einer Skala von 0 bis 20 ergibt.

Ein HLB-Wert von 0 entspricht einem vollständig lipophilen Molekül, ein HLB-Wert von 20 entspricht einem vollständig hydrophilen Molekül.

Tenside mit einem niedrigen HLB-Wert haben gute fettlösende Eigenschaften, ein hoher HLB-Wert bewirkt eine gute Benetzung hydrophiler Oberflächen. Aufgrund unterschiedlicher HLB-Werte lassen sich stabile Emulsionen in O/W bis W/O Systemen aufbauen.

Unter einem Öl-in-Wasser-Emulgator (O/W-Emulgator) wird ein Emulgator verstanden, der einen HLB-Wert aufweist, der hoch genug ist, um Öl-in-Wasser-Emulsionen zu ergeben. Der HLB-Wert eines solchen Emulgators ist normalerweise größer als etwa 8 und liegt häufig im Bereich von 8 bis 18.

Der nicht-ionische Emulgator, der die erfindungsgemäße Naturwachsoxidat-in-Wasser-Emulsion stabilisiert, weist vorzugsweise einen HLB-Wert zwischen 11 und 19 auf, da sich eine Naturwachsoxidat-Emulsion mit einem solchen nicht-ionischen Emulgator besonders gut stabilisieren läßt. Besonders bevorzugt liegt der HLB-Wert zwischen 13 und 18.

Der nicht-ionische Emulgator weist vorzugsweise einen EO-Wert (Zahl der Ethylenoxideinheiten, die an die funktionelle Gruppe verknüpft wird) größer 10 - 80 auf.

Bevorzugt handelt es sich bei den nicht-ionischen Emulgatoren um Fettalkoholpolyglykolether, Alkoholethoxylat, wie z.B. Fettalkoholethoxylat und Tributylphenolethoxylat.

In einer alternativen Ausführungsform handelt es sich bei dem Emulgator, der die wässrige Naturwachsoxidat-Emulsion stabilisiert, um ein anionisches Emulgatorsystem, da mit solchen Systemen überraschenderweise sehr gute Ergebnisse bei der Stabilisierung der Emulsion und der Ausbildung, Flexibilität und Stabilität der Barriereschicht erzielt wurden und die Barriereschichten eine sehr gute Wasserfestigkeit und Wasserdampfbarrierewirkung aufweisen. Damit eignen sich diese Emulgatoren insbesondere für Anwendungen in denen eine hohe Wasserfestigkeit benötigt wird, wie z.B. in Holzpflegemitteln.

Das Anion eines anionischen Emulgatorsystems kann durch Zugabe einer wasserlöslichen oder in Wasser dispergierbaren Alkalilauge- und/oder basischen Ammoniumverbindung zu einer organischen Säure mit einem geradkettigen aliphatischen Kohlenwasserstoffrest mit 12 bis 24 Kohlenstoffatomen erhalten werden Das Anion wird geliefert als ein Alkalimetallsalz, bevorzugt ein Natrium- und/oder Kaliumsalz, oder einem entsprechenden Ammonium- oder substituierten Ammoniumsalzder entsprechenden organischen Säure.

Der Begriff "Ammoniumsalz" bezeichnet solche Neutralisationsprodukte, die durch Umsetzung von Tensidsäuren in wäßrigem Medium mit Ammoniak oder Aminen wie flüchtigen Basen, z.B. Morpholin, Methylaminopropanol, Diethylaminoethanol (DEAE) usw., oder nicht-flüchtigen Basen, z.B. Monoethanolamin, Triethanolamin, Isopropanolamin, $\alpha,\omega$- und $\alpha,\gamma$-substituierten Diaminen wie Ethylendiamin, 1,2-Propylendiamin, 1,3-Propylendiamin, 1,4-Butylendiamin usw. erhalten werden. DEAE kann aufgrund seiner basischen Charakteristik ein entsprechendes Salz mit einer organischen Säure bilden.

Die polare organische Gruppe des Salzes oder der Säure kann das Carboxylat-, Sulfat- oder Sulfonation sein, und die Anionen liefernde Verbindung kann mehr als eine solche polare Gruppe aufweisen.

Beispiele für geeignete organische Säuren, die das Anion liefern, sind natürliche und synthetische aliphatische Carbonsäuren mit 12 bis 24 Kohlenstoffatomen, z.B. Myristin-, Palmitin-, Stearin-, Olein- und Behensäure, insbesondere solche der Seifen, wie sie durch Spalten von Triglyceridölen erhalten werden, z.B. Talgfettsäure, die ein Gemisch von Fettsäuren darstellt, die hauptsächlich aus Palmitin-, Stearin- und Oleinsäure bestehen;
Vorzugsweise ist das Anion ein solches, in dem eine Alkyl- oder Alkenylgruppe mit 16 bis 24 Kohlenstoffatomen vorliegt.

Vorzugsweise wird das Emulgatorsystem Oleinsäure/ Ammoniumhydroxid/KOH verwendet.

Die eingesetzte Menge des Emulgators hat einen Einfluss auf die Stabilität der Suspension und die Verteilung und Größe der Wachspartikel. Es hat sich gezeigt, dass sich besonders dünne und homogene Barriereschichten ausbilden lassen, wenn der Emulgator zu 1 - 20 Gew.-%, bevorzugt zu 2 - 15 Gew.-%, bezogen auf die Gesamtmasse der Emulsion, in der Emulsion enthalten ist.

Ein weiterer Gegenstand der Erfindung ist ein Verfahren zur Herstellung einer wässrige Naturwachsoxidat-Emulsion umfassend die Schritte:

a) Bereitstellen eines Naturwachsoxidats und eines anionischen oder nicht-ionischen Emulgators
b) Emulgieren des Naturwachsoxidats mit Hilfe des Emulgators in Wasser bei einer Temperatur die oberhalb des Schmelzpunktes des Naturwachsoxidats liegt,

dadurch gekenzeichnet, dass das Naturwachsoxidat ein Verhältnis von Säurezahl zu OH-Zahl größer gleich 1 aufweist. Das Naturwachsoxidat ist mittels der oben beschriebenen Oxidationsverfahren herstellbar.

Ein weiterer Gegenstand der Erfindung ist die Verwendung einer erfindungsgemäßen wässrigen Naturwachsoxidat-Emulsion zur Beschichtung eines polysaccharid- oder biopolymerhaltigen Substrats, bevorzugt eines zellulosehaltigen Substrats mit einer Wasserdampfbarriereschicht. Darüber hinaus sind Wasserdampfbarriereschichten für wasserdurchlässige Kunststoffsubstrate, wie z.B. Biopolymersubstrate, insbesondere Substrate aus Polylactid (PLA) geeignet.

Dementsprechend ist ein weiterer Gegenstand der Erfindung ein polysaccharid- oder biopolymerhaltiges Substrat umfassend eine Wasserdampfbarriereschicht, die aus einer erfindungsgemäßen wässrigen Naturwachsoxidat-Emulsion wird.

Bevorzugt handelt es sich bei dem polysaccharid- oder biopolymerhaltigen Substrat um ein zellulosehaltiges Substrat, besonders bevorzugt um Papier oder Pappe.

Diese beschichteten polysaccharid- oder biopolymerhaltigen Substrate lassen sich für jegliche Arten von Verpackungen oder Umhüllungen, wie z.B. Tabakartikel, Umverpackungen für Tabakartikel, Papierbecher, Verpackungen für Tiefkühlartikel, Brot-, Wurst- und Käse-und Pflanzenumverpackungen, sowie Pappkartons, Umverpackungen für Elektronikartikel etc. einsetzen.

Ein weiterer Gegenstand der Erfindung ist ein Verfahren zur Herstellung eines polysaccharid- oder biopolymerhaltigen Substrats, umfassend die Schritte:

a) Auftragung einer erfindungsgemäßen, wässrigen Naturwachsoxidat-Emulsion auf die Oberfläche des polysaccharid- oder biopolymerhaltigen Substrats;
b) Trocknung des beschichteten Substrats zur Ausbildung der Barriereschicht.

**Experimenteller Teil:**

**Tabelle 1: Methoden zur Bestimmung der angegebenen Parameter**

| Parameter | Methode |
|---|---|
| Dichte [g/cm$^3$] | ISO 1183-3 |
| Säurezahl (SZ) [mg KOH/g] | ISO 2114 |
| Verseifungszahl (VZ) [mg KOH/g] | ISO 3681 |
| Tropfpunkt (TP) [°C] | ISO 2176 |
| Nadelpenetrationszahl (NPZ) [mm$^{-1}$] | DIN 51579 |
| Hydroxylzahl (OH-Zahl) [mg KOH/g] | DGF M-IV 6 |
| Iodfarbzahl (IFZ) | DIN 6162 (2014) |
| Thermogravimetrische Analyse (TGA) [Gew.-%] | DIN 51006<br><br>Aufheizung von 25 bis 300°C mit 5K/min, dann Temperatur 30 min konstant bei 300°C. Messung des Massenverlusts bei Erreichen von 300°C und nach 30 min bei 300°C. |
| Cobb-Wert | DIN EN ISO 535 |
| Renewable Carbon Index | Der Renewable Carbon Index (RCI) beschreibt den Anteil von Kohlenstoffatomen aus nachwachsenden Rohstoffen in einer organischen Verbindung oder Mischung und wird nach folgender Formel berechnet:<br><br>$$RCI\ (\%) = \frac{\sum_{i=1}^{n}(M_{total} * M_i * BCC_i * 12\ /MW_i)}{\sum_{i=1}^{n}(M_{total} * M_i * BCC_i * 12\ /MW_i) + \sum_{i=1}^{n}(M_{total} * M_i * FCC_i *}$$<br>- $M_{total}$ = Gesamtmasse des mikronisierten Wachsadditivs<br>- $M_i$ = Masse der i-ten Komponente des mikronisierten Wachsadditivs (in %)<br>- $BCC_i$ = Anzahl biobasierter Kohlenstoffatome der i-ten Komponente des mikronisierten Wachsadditivs<br>- $FCC_i$ = Anzahl fossiler Kohlenstoffatome der i-ten Komponente des mikronisierten Wachsadditivs<br>- $MW_i$ = Molmasse der i-ten Komponente des mikronisierten Wachsadditivs<br>Anorganische Komponenten und Wasser werden bei der Berechnung des RCI nicht berücksichtigt. |

(fortgesetzt)

| Parameter | Methode |
|---|---|
| HLB-Wert | Der HLB-Wert nach Griffin (Hydrophil-Lipophil-Balance) gibt das Masse-Verhältnis zwischen dem polaren und dem unpolaren Teil eines Tensids an. Die Methode von Griffin (1954) wurde in erster Linie für nichtionische Tenside entwickelt, wobei sich der HLB-Wert wie folgt berechnet:<br><br>$$HLB = 10 * Mh/M$$<br><br>wobei Mh die Molekülmasse des hydrophilen Teils des Moleküls und M die Molekülmasse des gesamten Moleküls ist, was ein Ergebnis auf einer Skala von 0 bis 20 ergibt. |

**Ausführung der Beispiele:**

**Tabelle 2: Verwendete Wachse und Wachsoxidate**

| | Wachstyp | Hersteller | Dichte | SZ | OH-Zahl | VZ | TP | NPZ | IFZ | RCI | TGA |
|---|---|---|---|---|---|---|---|---|---|---|---|
| Crude rice bran wax | Naturwachs, Reiskleiewachs | Yihai Kerry Arawana Holdings Co. Ltd. | 0,98 | 4 | 8,7 | 81 | 78°C | 4 | >120 | 100 | n.b. |
| PODAX-BN 5 | Raffiniertes Reiskleiewachs | Shanghai Tongs Science & Technology Co. Ltd. | 0,98 | 12,6 | 19 | 88 | 78,9 | 4 | 37 | n.b. | n.b. |
| Licocare RBW 101 | Reiskleiewachs oxidat | Clariant Ltd. | 0,98 | 19 | 5 | 89 | 78 | 1 | 12 | 100 | 7,44/18,35 |
| Licocare RBW 102 | Reiskleiewachs oxidat | Clariant Ltd. | 0,99 | 52 | 4 | 113 | 77 | 3 | 3 | 100 | 15,49/32,03 |
| Licocare RBW 106 | Reiskleiewachs oxidat | Clariant Ltd. | 1,00 | 128 | 5 | 168 | 76 | 3 | 1 | 100 | - |
| Licowax PED 521 | Oxidiertes Polyethylen | Clariant Ltd. | 0,95 | 17 | - | - | 104 | 4 | - | 0 | 5,1/8,3 |
| Maiswachsoxidat 1 | Oxidiertes Maiswachs | Clariant Ltd. | 0,98 | 45 | 11 | 104 | 76 | 2 | 1 | 100 | 17,6/41,3 |
| Maiswachsoxidat 2 | Oxidiertes Maiswachs | Clariant Ltd. | 1,00 | 65 | 2 | 123 | 73 | 3 | 0,7 | 100 | 29,4/55,7 |
| Maiswachsoxidat 3 | Oxidiertes Maiswachs | Clariant Ltd. | 0,99 | 127 | 1 | 156 | 71 | 3 | 0,3 | 100 | 65,6/ |

8

**Herstellung der Maiswachsoxidate 1 bis 3:**

Da es sich bei den Maiswachsoxidaten um keine kommerziell erhältlichen Produkte handelt, werden im Folgenden die Versuchsbeschreibungen zur Darstellung der Maiswachsoxidate aufgeführt:

In einem 3 L Reaktionsgefäß mit Rührer, Temperaturfühler, Tropftrichter und Rückflusskühler wurde die in Tabelle 4 angegebene Menge Chromtrioxid in Schwefelsäure (Konzentration: 100g CrO3/L) vorgelegt und auf 100°C erwärmt. Anschließend wurde geschmolzenes (90 °C) Naturwachs im Rohzustand portionsweise zugegeben. Die Temperatur des Reaktionsgemisches wurde auf 110°C eingestellt und 4 h mit ca. 200 U/min mit einem KPG-Rührer gerührt. Das Heizen sowie Rühren wurde eingestellt. Sobald sich die Phasen getrennt haben, wurde die wässrige Phase abgetrennt. Dieser Vorgang wurde zur Herstellung der Maiswachsoxidate 1 und 2 zweimal durchgeführt, und zur Herstellung des Maiswachsoxidats 3 fünfmal, wobei die in Tabelle 3 angegebenen Mengen eingesetzt wurden.

**Tabelle 3: Mengenangaben zur Herstellung der eingesetzten Maiswachsoxidate**

| Beispiel | 1 | 2 | 3 |
|---|---|---|---|
| Naturwachs [g] | 200 | 200 | 200 |
| CrO3/H$_2$SO$_4$ [L] | 2,0<br>2,0 | 2,0<br>3,4 | 1,0<br>1,0<br>1,0<br>1,0<br>1,0 |

Die organische Phase wurde durch Waschen mit einer wässrigen Lösung von Oxalsäure und Schwefelsäure und anschließend durch Waschen mit Wasser von Chromrückständen befreit, in warme Zentrifugengläser abgelassen und zentrifugiert.

**Tabelle 4: Zur Herstellung der Emulsionen eingesetzte Emulgatoren**

| Emulgator No. | Chemische Klassifikation | Generische Beschreibung | INCI | HLB Wert | Emulgatortyp |
|---|---|---|---|---|---|
| E 1 | Fettalkoholpoly -glykolether | Talgalkylethoxylat mit 20 EO | Cetearet h-20 | 15,4 | Nichtionisches Tensid |
| E 2 | Fettalkoholpoly -glykolether | Oleylethoxylat mit 10 EO | Oleth-10 | 12,6 | Nichtionisches Tensid |
| E 3 | Tributylphenolethoxylat | Tri-sec.-butylphenol-ethoxylat mit 50 EO | Dodoxyn ol-50 | 17,9 | Nichtionisches Tensid |
| E 5 | Fettalkoholpoly -glykole-ther | C12/C15-Oxoalkoho-lethoxylat mit 10 EO | C12-15 Alketh-10 | 13,5 | Nichtionisches Tensid |
| E 6 | Fettalkoholethoxylat | Talgalkylethoxylat mit 25 EO | Cetearet h-20 | 16,2 | Nichtionisches Tensid |
| E 7 | Fettsäurebasier tes Emulgatorsystem | Oleinsäure | n.a. | n.a. | Anionischer Emulgator |
| | | Ammoniumhydroxid (30%) / KOH | | | |
| E 8 | | Diethylethanolamin (DEAE) | n.a. | n.a. | anionischer Emulgator |

**A) Herstellung verschiedener wasserbasierter Wachsemulsionen**

A1) Herstellung der Formulierungen F1, F2, F9, F10 aus Tabelle 5 und der Formulierungen F12, F13, F14, F15 aus Tabelle 6:

Das jeweilige Wachs und der jeweilige Emulgator wurden bei 125°C vollständig aufgeschmolzen und zu einer homogenen Masse verrührt. Siedendes dest. Wasser wurde in die 125°C heiße Wachsschmelze eingerührt. Die erhaltene Emulsion wurde unter starkem Rühren abgekühlt (ca. 3 K/min).

A2) Herstellung der Formulierung F4 aus Tabelle 5:
Das Wachs wurde bei 125°C vollständig aufgeschmolzen und das DEAE langsam zugetropft. Die Schmelze wurde 2 min gerührt. Das siedende Wasser wurde in die 125°C heiße Wachsschmelze eingerührt. Die erhaltene Emulsion wurde unter starkem Rühren abgekühlt (ca. 3 K/min).

A3) Herstellung der Formulierungen F3, F5 und F6 aus Tabelle 5 und der Formulierungen F16 und F17 aus Tabelle 6:
Das Wachs, Oleinsäure, Ammoniaklösung und KOH wurden mit 50% der benötigten Menge an dest. Wasser im Druckreaktor vermengt. Das Gemenge wurde im Druckreaktor auf 135°C erhitzt und die restliche Menge Wasser bei ca. 125°C zum Gemisch zugegeben. Das Gemisch wurde bei 135°C für 15 min gerührt. Die Emulsion wurde anschließend auf 30°C unter Rühren abgekühlt (ca. 3 K/min).

A4) Herstellung der Formulierung F7:
Das Wachs und Emulgator E 5 wurden bei 125°C vollständig aufgeschmolzen und zu einer homogenen Masse verrührt. Die KOH/Ethylenglykol-Mischung wurde unter Rühren zugetropft und weitere 2 min vermengt. Die heiße Wachsmischung wurde anschließend in siedendes dest. Wasser eingerührt. Die erhaltene Emulsion wurde unter starkem Rühren abgekühlt (ca. 3 K/min).

**Tabelle 5: Verwendete Formulierungen basierend auf Reiskleiewachsoxidaten**

| Formulierung | F1 (E.) | F2 (E.) | F3 (E.) | F4 (E.) | F5 (E.) | F6 (E.) | F7 (V.) | F9 (V.) | F10 (V.) |
|---|---|---|---|---|---|---|---|---|---|
| PODAX BN-5 | | | | | | | | 10 | 20 |
| Licocare RBW 101 | | | 20 | | | | | | |
| Licocare RBW 102 | 25 | | | | 20 | 20 | | | |
| Licocare RBW 106 | | 25 | | 20 | | | | | |
| Licowax PED 521 | | | | | | | 20 | | |
| Oleinsäure | | | 4,0 | | 4 | 7 | | | |
| Ammoniumhydroxid | | | 8,0 | | 8,0 | 6,5 | | | |
| KOH (20%) | | | 0,2 | | 0,2 | 0,5 | | | |
| KOH 21,5% in Ethylenglykol | | | | | | | 1,6 | | |
| E 1 | 5 | | | | | | | | |
| E 2 | | | | | | | | 2,85 | 5,6 |
| E 3 | | 5 | | | | | | | |
| E 5 | | | | | | | 4,0 | | |
| E 8 | | | | 5,5 | | | | | |
| Dest. Wasser | Auffüllen mit dest. H$_2$O auf 100% | | | | | | | | |
| Emulsionstabilität | + | + | + | + | + | + | + | + | - |

**Tabelle 6: Verwendete Formulierungen basierend auf Maiswachsoxidaten**

| | F12 (E.) | F13 (E.) | F14 (E.) | F15 (E.) | F16 (E.) | F17 (E.) |
|---|---|---|---|---|---|---|
| Maiswachsoxidat 1 | 25 | | | | 20 | |
| Maiswachsoxidat 2 | | 25 | 25 | | | 20 |
| Maiswachsoxidat 3 | | | | 25 | | |
| Oleinsäure | | | | | 4 | 4 |
| Ammoniumhydroxid | | | | | 8 | 8 |
| KOH (20%) | | | | | 0,2 | 0,2 |
| E 1 | 5 | 5 | | | | |
| E 2 | | | | | | |
| E 3 | | | | 5 | | |

(fortgesetzt)

|  | F12 (E.) | F13 (E.) | F14 (E.) | F15 (E.) | F16 (E.) | F17 (E.) |
|---|---|---|---|---|---|---|
| E 6 |  |  | 5 |  |  |  |
| Dest. Wasser | Auffüllen mit dest. $H_2O$ auf 100% | | | | | |
| Emulsionsstabilität | + | + | + | + | + | + |

Die in Tabelle 5 und 6 aufgeführten erfindungsgemäßen Formulierungen F1-F6 und F12-F17 bilden alle stabile Emulsionen aus. Dies gilt nicht für das Vergleichsbespiel F10 bei dem sich bei einem Wachsanteil von 20% keine stabile Emulsion mehr ausbildet. Vergleichsbeispiel F9 mit 10% Wachs bildet zwar eine stabile Emulsion, der geringere Wachsanteil ist jedoch nachteilig für die Beschichtungsqualität und Trocknungszeit.

**B) Herstellung von beschichteten Papiersubstraten mit einer Wachsemulsion.**

Es wurde die in Tabelle 7 aufgeführte Wachsemulsion mit einem 50 $\mu$m Rakel aufgetragen und eine Prüffläche von 12,5 cm x 12,5 cm ausgeschnitten und für 24 h bei konstanter Temperatur von 23°C und 30 % rel. Luftfeuchte gelagert. Die Probe wurde tariert (Tara 1) und im Cobb-Aluminiumbecher eingespannt.

Anschließend wurden 100 ml dest. Wasser für 60 s auf die Probe gegeben und entfernt. Die Wasserreste wurden mit Löschpapier und einem saugfähigen Roller entfernt und das Gewicht erneut bestimmt (Tara 2). Die Berechnung des Cobb-Wertes erfolgte nach folgender Formel:

$$Cobb\ Wert_{60s} = (Tara\ 2 - Tara\ 1)\ x\ 115,48658$$

Die Werte wurden dreifach bestimmt und der Median der Messungen in Tabelle 7 aufgeführt.

**Tabelle 7: $Cobb_{60}$-Werte der beschichteten Papiersubstrate**

|  | $Cobb_{60}$-Wert Algro Finess 80 g/m$^2$ | $Cobb_{60}$-Wert Koehler |
|---|---|---|
| Unbeschichtet | 30,41 | 35,80 |
| F1 | 13,85 | 20,78 |
| F2 | 13,47 | 23,86 |
| F3 | 6,54 | 5,77 |
| F4 | 0 | 0 |
| F5 | 0 | 0 |
| F6 | 2,31 | 5,00 |
| F7 | 73,1 | 172,8 |
| F9 | 61,59 | 139,35 |
| F12 | 0,00 | 0,38 |
| F13 | 6,54 | -0,38 |
| F14 | 15,78 | 3,46 |
| F15 | 15,01 | 15,4 |
| F16 | 1,54 | 0,77 |
| F17 | -1,15 | 0,77 |

Alle erfindungsgemäßen Beispiele F1 - F6 und F12 - F17 zeigen gegenüber dem unbeschichteten Papieren sowie den Vergleichsbeispielen F7 und F9 eine signifikant verminderte Wasseraufnahme, die sich in niedrigeren $Cobb_{60}$-Werten zeigt.

**C) Herstellung von beschichteten Trägerfolien zur Bestimmung der Barrierewirkung einer Wachsbeschichtung mit Hilfe der Wasserdampftransmissionsrate.**

Die Wachs- oder Wachsoxidat-Emulsion bzw. Dispersion wurde als dünner Film auf Cellophan beschichtet. Dafür wurde ein Beschichtungs-Halbautomat der Firma Sumet Messtechnik, Typ CUF 5 zur Verarbeitung von Substraten in Bogenform bei einer maximalen Fläche in DIN A3 Format (420 x 297 mm) verwendet. Der Nassauftrag betrug 50 $\mu$m. Die Auftragsgeschwindigkeit betrug 30 mm/s. Die Trocknungstemperatur lag zwischen 70°C und 90°C für 1 - 5 min Trocknungsdauer.

Um die Effekte des Substrats zu eliminieren wurden alle Barriereschichten auf Cellophan aufgebracht, welches eine bekannte Wasserdampfpermeabilität besitzt. Die Wasserdampftransmissionsrate Q von Cellophanfolie beträgt 1084 g/(m$^2$*d).

Die Bestimmung der Wasserdampfbarriere als Wasserdampftransmissionsrate Q erfolgte nach DIN 53122-1 bei 23°C und einem Feuchtegefälle von 85% rel. Luftfeuchtigkeit auf der einen Seite der Barriere und 0% auf der anderen Seite der Barriere. Der gemessene Q-Wert (Einheit: g/(m2*d)) beschreibt, wie viel Gramm Wasser an einem Tag durch eine Fläche von einem Quadratmeter permeieren würden. Dieser Wert hängt jedoch maßgeblich von der Dicke der Wachsschicht ab. Je dicker die Wachsschicht ist, desto geringer ist der gemessene Wert. Um verschiedene Materialien unterschiedlicher Dicke vergleichbar zu machen, wird daher ein Wert angegeben, der auf 100 $\mu$m Schichtdicke normiert wird (Q100 [g*100$\mu$m/(m2*d)]). Dieser wird nach folgender Formel ermittelt:

$$\frac{1}{Q(ges)} = \frac{1}{Q(Substrat)} + \frac{1}{Q(Barriereschicht)}$$

Damit lassen sich die Wasserdampftransmissionsraten jeweiligen Barriereschicht der in Tabelle aufgeführten Messungen nach

$$\frac{1}{Q(Barriereschicht)} = \frac{1}{Q(gesamt)} - \frac{1}{1084\ \mathrm{g/(m^2 * d)}}$$

berechnen.

Zur Ermittlung der auf die Schichtdicke normierten Wasserdampfpermeabilität Q100 wurde die Schichtdicke der Barriereschicht mit einem Mikroskop mit Hilfe eines Mikrotomschnitts des beschichteten Substrats bestimmt.

$$Q100 = \frac{Q(Barriereschicht)}{100} * Schichtdicke\ Barriereschicht$$

Als Referenz dient die Wasserdampftransmissionsrate von Lupolen, deren Q100-Wert 1 ist.

Weiterhin wurde die Wasserdampfpermeabilität einer dünnen Crude RBW-Schicht bestimmt, die nicht auf ein Cellophansubstrat aufgebracht wurde.

Die in Tabelle 8 angegebenen Messwerte sind ein Mittelwert aus 4 durchgeführten Messungen.

**Tabelle 8: Wasserdamptransmissionsraten unbeschichteter und beschichteter Substrate aus Folie (Trägerfolien)**

| Probe | Art der Emulsion /Beschichtung | Q(gesamt) (Substrat + Barriere schicht) [g/(m2*d)] | Q (Barriere schicht) [g/(m2*d)] | Schichtdicke der Barriere schicht [$\mu$m] | Q100 der Probe [g*100$\mu$m/ (m2*d)] |
|---|---|---|---|---|---|
| Cellophan unbeschichtet | keine Beschichtung | Kein Wachs | | 0 | |
| Lupolen 1800 H | keine Beschichtung, kein Cellophansubstrat | - | - | 100 | 1,00 |
| Crude Rice bran wax | substratlose Barriereschicht | 0,202 | 0,2020 | 239 | 0,48 |

(fortgesetzt)

| Probe | Art der Emulsion /Beschichtung | Q(gesamt) (Substrat + Barriere schicht) [g/(m²*d)] | Q (Barriere schicht) [g/(m2*d)] | Schichtdicke der Barriere schicht [μm] | Q100 der Probe [g*100μm/ (m2*d)] |
|---|---|---|---|---|---|
| F1 (E.) | nicht-ionisch | 28,2 ± 2,4 | 28,9 | 6,6 | 1,9 |
| F2 (E.) | nicht-ionisch | 45,3 ±2,7 | 47,3 | 5,5 | 2,6 |
| F4 (E.) | anionisch | 7,36 ± 0,4 | 7,4 | 4,4 | 0,32 |
| F5 (E.) | anionisch | 6,86 ± 1,1 | 6,9 | 3,3 | 0,23 |
| F6 (E.) | anionisch | 20,0 ± 4,0 | 20,4 | 5,5 | 1,1 |

Alle erfindungsgemäßen Beispiele zeigen gegenüber der unbeschichteten CellophanFolie eine signifikant verringerte Wasserdampfdurchlässigkeit, die sich in niedrigeren Q100-Werten zeigt. Die Q100-Werte der erfindungsgemäßen Beispiele liegen in einem vergleichbaren Bereich wie der Q100-Werte der Referenzfolie Lupolen 100, die ein gängiges, polyethylenbasiertes Barrierematerial repräsentiert.

Das "Crude Rice bran wax" zeigt zwar gute Barriereeigenschaften, ist allerdings nicht emulgierbar. Ein Auftrag aus der Schmelze erfordert einen höheren Energieeintrag und geht im Vergleich zu wässrigen Emulsionen mit einer höheren Schichtdicke einher, was sich nachteilig auf den Materialverbrauch auswirkt. Höhere Schichtdicken beeinflußen zudem die Haftung und die Flexibilät der Barriereschicht nachteilig.

**Patentansprüche**

1.  Wässrige Naturwachsoxidat-Emulsion zur Herstellung einer Wasser- und/oder Wasserdampfbarriereschicht auf einem Polysaccharid- oder biopolymerhaltigem Substrat, umfassend

    (a) mindestens ein Naturwachsoxidat, das ein Verhältnis von Säurezahl zu OH-Zahl größer gleich 1 aufweist; und
    (b) mindestens einen anionischen oder nicht-ionischen Emulgator.

2.  Wässrige Naturwachsoxidat-Emulsion gemäß Anspruch 1, **dadurch gekennzeichnet, dass** das Naturwachsoxidat mit einem Oxidationsverfahren herstellbar ist, das ausgewählt ist aus der Gruppe bestehend aus Chromsäureoxidation, Chromschwefelsäureoxidation (Chromtrioxid und Schwefelsäure), Dichromatsalzoxidation, thermische Oxidation mit Luftsauerstoff und elektrochemische Oxidation.

3.  Wässrige Naturwachsoxidat-Emulsion gemäß einem der vorhergehenden Ansprüche, **dadurch gekennzeichnet, dass** das Naturwachsoxidat aus der Gruppe bestehend aus Reiskleiewachsoxidat, Maiswachsoxidat, Zuckerrohrwachsoxidat, Sonnenblumenwachsoxidat und Carnaubauwachsoxidat gewählt wurde, wobei bevorzugt Reiskleiewachsoxidat oder Maiswachsoxidat gewählt werden.

4.  Wässrige Naturwachsoxidat-Emulsion gemäß einem oder mehreren der vorhergehenden Ansprüche, **dadurch gekennzeichnet, dass** das Naturwachsoxidat eine Säurezahl zwischen 1 und 140 mg KOH/g, bevorzugt zwischen 15 und 140 mg KOH/g, besonders bevorzugt zwischen 30 und 140 mg KOH/g, gemessen nach ISO 2114, aufweist.

5.  Wässrige Naturwachsoxidat-Emulsion gemäß einem oder mehreren der vorhergehenden Ansprüche, **dadurch gekennzeichnet, dass** das Naturwachsoxidat eine Hydroxyl-Zahl, gemessen nach DGF M-IV 6, kleiner 8 mg KOH/g, bevorzugt kleiner 5 mg KOH/g besitzt.

6.  Wässrige Naturwachsoxidat-Emulsion gemäß einem oder mehreren der vorhergehenden Ansprüche, **dadurch gekennzeichnet, dass** das Naturwachsoxidat eine Iodfarbzahl, gemessen nach DIN 6162, kleiner 20, bevorzugt kleiner 15 und besonders bevorzugt kleiner 10 aufweist.

7.  Wässrige Naturwachsoxidat-Emulsion gemäß einem oder mehreren der vorhergehenden Ansprüche, **dadurch gekennzeichnet, dass** das Naturwachsoxidat einen Tropfpunkt zwischen 65 und 110 °C, gemessen nach ISO 2176, aufweist.

8. Wässrige Naturwachsoxidat-Emulsion gemäß einem oder mehreren der vorhergehenden Ansprüche, **dadurch gekennzeichnet, dass** das Naturwachsoxidat zu 5 bis 50 Gew.-%, bevorzugt zu 10 bis 45 Gew.-%, besonders bevorzugt zu 15 bis 40 Gew.-%, ganz besonders bevorzugt zu 20 bis 35 Gew.-%, bezogen auf die Gesamtmasse der Emulsion, in der Emulsion enthalten ist.

9. Wässrige Naturwachsoxidat-Emulsion gemäß einem oder mehreren der vorhergehenden Ansprüche, **dadurch gekennzeichnet, dass** der nicht-ionische Emulgator der einen HLB-Wert zwischen 11 und 19, bevorzugt zwischen 13 und 18 aufweist.

10. Wässrige Naturwachsoxidat-Emulsion gemäß einem oder mehreren der vorhergehenden Ansprüche, **dadurch gekennzeichnet, dass** der mindestens eine nicht-ionische Emulgator ausgewählt wurde aus der Gruppe bestehend aus Fettalkoholpolyglykolether, Alkoholethoxylat und Tributylphenolethoxylat.

11. Wässrige Naturwachsoxidat-Emulsion gemäß einem oder mehreren der vorhergehenden Ansprüche, **dadurch gekennzeichnet, dass** es sich bei dem Emulgator um ein anionisches Emulgatorsystem handelt, bevorzugt um das Emulgatorsystem Oleinsäure/Ammoniumhydroxid/KOH und/oder Diethylaminoethanol.

12. Wässrige Naturwachsoxidat-Emulsion gemäß einem oder mehreren der vorhergehenden Ansprüche, **dadurch gekennzeichnet, dass** der Emulgator zu 1 - 20 Gew.-%, bevorzugt zu 2 - 15 Gew.-%., bezogen auf die Gesamtmasse der Emulsion, in der Emulsion enthalten ist.

13. Verfahren zur Herstellung einer wässrigen Naturwachsoxidat-Emulsion gemäß einem oder mehreren der vorhergehenden Ansprüche, umfassend die Schritte

   a) Bereitstellen eines Naturwachsoxidats und eines anionischen oder nicht-ionischen Emulgators;
   b) Emulgieren des Naturwachsoxidats mit Hilfe des Emulgators in Wasser bei einer Temperatur die oberhalb des Schmelzpunktes des Naturwachsoxidats liegt.

   dadurch gekenzeichnet, dass das Naturwachsoxidat ein Verhältnis von Säurezahl zu OH-Zahl größer gleich 1 aufweist.

14. Verfahren zur Herstellung einer wässrigen Naturwachsoxidat-Emulsion gemäß Anspruch 13, **dadurch gekennzeichnet, dass** das Naturwachsoxidat mit einem Oxidationsverfahren ausgewählt aus der Gruppe bestehend aus Chromsäureoxidation, Chromschwefelsäureoxidation (Chromtrioxid und Schwefelsäure), Dichromatsalzoxidation, Oxidation mit Luftsauerstoff und elektrochemische Oxidation herstellbar ist.

15. Verwendung einer wässrigen Naturwachsoxidat-Emulsion gemäß einem oder mehreren der Ansprüche 1 - 12 zur Beschichtung eines polysaccharidhaltigen Substrats, bevorzugt eines zellulosehaltigen Substrats mit einer Wasser- und/oder Wasserdampfbarriereschicht.

16. Polysaccharid- oder biopolymerhaltiges Substrat umfassend eine Wasser-und/oder Wasserdampfbarriereschicht, gebildet aus einer wässrigen Naturwachsoxidat-Emulsion gemäß einem der vorhergehenden Ansprüche 1-12.

17. Polysaccharid- oder biopolymerhaltiges Substrat gemäß Anspruch 16, **dadurch gekennzeichnet, dass** es sich bei dem polysaccharid oder biopolymerhaltigen Substrat um ein zellulosehaltiges Substrat, bevorzugt um Papier oder Pappe handelt.

18. Verfahren zur Herstellung eines polysaccharid oder biopolymerhaltigen Substrats gemäß einem der Ansprüche 16 - 17 umfassend die Schritte

   a) Auftragung einer wässrigen Naturwachsoxidat-Emulsion nach einem oder mehreren der Ansprüche 1-12 auf die Oberfläche des polysaccharid- oder biopolymerhaltigen Substrats
   b) Trocknung des beschichteten Substrats zur Ausbildung der Barriereschicht.

**Claims**

1. An aqueous natural wax oxidate emulsion for establishment of a water and/or water vapor barrier layer on a polysaccharide- or biopolymer-containing substrate, comprising

> (a) at least one natural wax oxidate having a ratio of acid number to OH number of not less than 1; and
> (b) at least one anionic or nonionic emulsifier.

2. The aqueous natural wax oxidate emulsion as claimed in claim 1, **characterized in that** the natural wax oxidate is producible by an oxidation method selected from the group consisting of chromic acid oxidation, chromosulfuric acid oxidation (chromium trioxide and sulfuric acid), dichromate salt oxidation, thermal oxidation with atmospheric oxygen and electrochemical oxidation.

3. The aqueous natural wax oxidate emulsion as claimed in either of the preceding claims, **characterized in that** the natural wax oxidate is selected from the group consisting of rice bran wax oxidate, corn wax oxidate, sugarcane wax oxidate, sunflower wax oxidate and carnauba wax oxidate, preferably selected from rice bran wax oxidate and corn wax oxidate.

4. The aqueous natural wax oxidate emulsion as claimed in one or more of the preceding claims, **characterized in that** the natural wax oxidate has an acid number between 1 and 140 mg KOH/g, preferably between 15 and 140 mg KOH/g, more preferably between 30 and 140 mg KOH/g, measured to ISO 2114.

5. The aqueous natural wax oxidate emulsion as claimed in one or more of the preceding claims, **characterized in that** the natural wax oxidate has a hydroxyl number, measured to DGF M-IV 6, of less than 8 mg KOH/g, preferably less than 5 mg KOH/g.

6. The aqueous natural wax oxidate emulsion as claimed in one or more of the preceding claims, **characterized in that** the natural wax oxidate has an iodine color value, measured to DIN 6162, of less than 20, preferably less than 15 and more preferably less than 10.

7. The aqueous natural wax oxidate emulsion as claimed in one or more of the preceding claims, **characterized in that** the natural wax oxidate has a dropping point between 65° and 110°C, measured to ISO 2176.

8. The aqueous natural wax oxidate emulsion as claimed in one or more of the preceding claims, **characterized in that** the natural wax oxidate is present in the emulsion to an extent of 5% to 50% by weight, preferably to an extent of 10% to 45% by weight, more preferably to an extent of 15% to 40% by weight, most preferably to an extent of 20% to 35% by weight, based on the total mass of the emulsion.

9. The aqueous natural wax oxidate emulsion as claimed in one or more of the preceding claims, **characterized in that** the nonionic emulsifier has an HLB value between 11 and 19, preferably between 13 and 18.

10. The aqueous natural wax oxidate emulsion as claimed in one or more of the preceding claims, **characterized in that** the at least one nonionic emulsifier has been selected from the group consisting of fatty alcohol polyglycol ether, alcohol ethoxylate and tributylphenol ethoxylate.

11. The aqueous natural wax oxidate emulsion as claimed in one or more of the preceding claims, **characterized in that** the emulsifier is an anionic emulsifier system, preferably the oleic acid/ammonium hydroxide/KOH and/or diethylaminoethanol emulsifier system.

12. The aqueous natural wax oxidate emulsion as claimed in one or more of the preceding claims, **characterized in that** the emulsifier is present in the emulsion to an extent of 1-20% by weight, preferably to an extent of 2-15% by weight, based on the total mass of the emulsion.

13. A process for producing an aqueous natural wax oxidate emulsion as claimed in one or more of the preceding claims, comprising the steps of

> a) providing a natural wax oxidate and an anionic or nonionic emulsifier;
> b) emulsifying the natural wax oxidate with the aid of the emulsifier in water at a temperature above the melting point of the natural wax oxidate,

**characterized in that** the natural wax oxidate has a ratio of acid number to OH number of not less than 1.

14. The process for producing an aqueous natural wax oxidate emulsion as claimed in claim 13, **characterized in that** the natural wax oxidate is producible by an oxidation method selected from the group consisting of chromic acid oxidation, chromosulfuric acid oxidation (chromium trioxide and sulfuric acid), dichromate salt oxidation, oxidation with atmospheric oxygen and electrochemical oxidation.

15. The use of an aqueous natural wax oxidate emulsion as claimed in one or more of claims 1-12 for coating of a polysaccharide-containing substrate, preferably a cellulosic substrate with a water and/or water vapor barrier layer.

16. A polysaccharide- or biopolymer-containing substrate comprising a water and/or water vapor barrier layer formed from an aqueous natural wax oxidate emulsion as claimed in any of the preceding claims 1-12.

17. The polysaccharide- or biopolymer-containing substrate as claimed in claim 16, **characterized in that** the polysaccharide- or biopolymer-containing substrate is a cellulosic substrate, preferably paper or cardboard.

18. A process for producing a polysaccharide- or biopolymer-containing substrate as claimed in either of claims 16-17, comprising the steps of

a) applying an aqueous natural wax oxidate emulsion as claimed in one or more of claims 1-12 to the surface of the polysaccharide- or biopolymer-containing substrate
b) drying the coated substrate to form the barrier layer.

**Revendications**

1. Émulsion aqueuse d'oxyde de cire naturelle pour la fabrication d'une couche barrière à l'eau et/ou à la vapeur d'eau sur un substrat contenant des polysaccharides ou des biopolymères, comprenant

(a) au moins un oxyde de cire naturelle présentant un rapport entre l'indice d'acide et l'indice d'OH supérieur ou égal à 1 ; et
(b) au moins un émulsifiant anionique ou non ionique.

2. Émulsion aqueuse d'oxyde de cire naturelle selon la revendication 1, **caractérisée en ce que** l'oxyde de cire naturelle peut être préparé par un procédé d'oxydation choisi parmi le groupe constitué par l'oxydation à l'acide chromique, l'oxydation à l'acide chromique et sulfurique (trioxyde de chrome et acide sulfurique), l'oxydation à l'oxyde de sel de dichromate, l'oxydation thermique à l'oxygène de l'air et l'oxydation électrochimique.

3. Émulsion aqueuse d'oxyde de cire naturelle selon l'une des revendications précédentes, **caractérisée en ce que** l'oxyde de cire naturelle est choisi parmi le groupe constitué de l'oxyde de cire de son de riz, de l'oxyde de cire de maïs, de l'oxyde de cire de canne à sucre, de l'oxyde de cire de tournesol et de l'oxyde de cire de carnauba, l'oxyde de cire de son de riz ou l'oxyde de cire de maïs étant préférés.

4. Émulsion aqueuse d'oxyde de cire naturelle selon une ou plusieurs des revendications précédentes, **caractérisée en ce que** l'oxyde de cire naturelle présente un indice d'acidité compris entre 1 et 140 mg de KOH/g, de préférence entre 15 et 140 mg de KOH/g, de préférence encore entre 30 et 140 mg de KOH/g, mesuré selon la norme ISO 2114.

5. Émulsion aqueuse d'oxyde de cire naturelle selon une ou plusieurs des revendications précédentes, **caractérisée en ce que** l'oxyde de cire naturelle a un indice d'hydroxyle, mesuré selon la norme DGF M-IV 6, inférieur à 8 mg KOH/g, de préférence inférieur à 5 mg KOH/g.

6. Émulsion aqueuse d'oxyde de cire naturelle selon une ou plusieurs des revendications précédentes, **caractérisée en ce que** l'oxyde de cire naturelle présente un indice d'iodation, mesuré selon la norme DIN 6162, inférieur à 20, de préférence inférieur à 15 et de préférence encore inférieur à 10.

7. Émulsion aqueuse d'oxyde de cire naturelle selon une ou plusieurs des revendications précédentes, **caractérisée en ce que** l'oxyde de cire naturelle présente un point de goutte compris entre 65° et 110 °C, mesuré selon la norme ISO 2176.

8. Émulsion aqueuse d'oxyde de cire naturelle selon une ou plusieurs des revendications précédentes, **caractérisée en**

**ce que** l'oxyde de cire naturelle est contenue dans l'émulsion à raison de 5 à 50 % en poids, de préférence de 10 à 45 % en poids, de préférence particulière de 15 à 40 % en poids, de manière particulièrement préférée de 20 à 35 % en poids, par rapport à la masse totale de l'émulsionl.

9. Émulsion aqueuse d'oxyde de cire naturelle selon une ou plusieurs des revendications précédentes, **caractérisée en ce que** l'émulsifiant non ionique présente une valeur HLB comprise entre 11 et 19, de préférence entre 13 et 18.

10. Émulsion aqueuse d'oxyde de cire naturelle selon une ou plusieurs des revendications précédentes, **caractérisée en ce que** le ou les émulsifiants non ioniques sont choisis parmi le groupe constitué par les polyglycoléthers d'alcools gras, les éthoxylates d'alcool et les éthoxylates de tributylphénol.

11. Émulsion aqueuse d'oxydes de cire naturelle selon une ou plusieurs des revendications précédentes, **caractérisée en ce que** l'émulsifiant est un système émulsifiant anionique, de préférence le système émulsifiant acide oléique / hydroxyde d'ammonium / KOH et/ou diéthylaminoéthanol.

12. Émulsion aqueuse d'oxydat de cire naturelle selon une ou plusieurs des revendications précédentes, **caractérisée en ce que** l'émulsifiant est contenu dans l'émulsion à raison de 1 à 20 % en poids, de préférence de 2 à 15 % en poids, par rapport à la masse totale de l'émulsion.

13. Procédé de préparation d'une émulsion aqueuse d'oxyde de cire naturelle selon une ou plusieurs des revendications précédentes, comprenant les étapes suivantes

   a) fournir un oxyde de cire naturelle et un émulsifiant anionique ou non ionique;
   b) émulsionner l'oxyde de cire naturelle à l'aide de l'émulsifiant dans de l'eau à une température supérieure au point de fusion de l'oxyde de cire naturelle.

   **caractérisé en ce que** l'oxyde de cire naturelle présente un rapport entre l'indice d'acide et l'indice d'OH supérieur ou égal à 1.

14. Procédé de fabrication d'une émulsion aqueuse d'oxyde de cire naturelle selon la revendication 13, **caractérisé en ce que** l'oxyde de cire naturelle peut être fabriqué à l'aide d'un procédé d'oxydation choisi parmi le groupe constitué de l'oxydation à l'acide chromique, de l'oxydation à l'acide chromosulfurique (trioxyde de chrome et acide sulfurique), de l'oxydation à l'aide d'un sel de dichromate, de l'oxydation à l'air et de l'oxydation électrochimique.

15. Utilisation d'une émulsion aqueuse d'oxyde de cire naturelle selon une ou plusieurs des revendications 1 à 12 pour le revêtement d'un substrat contenant des polysaccharides, de préférence un substrat contenant de la cellulose, avec une couche barrière à l'eau et/ou à la vapeur d'eau.

16. Substrat contenant des polysaccharides ou des biopolymères, comprenant une couche barrière à l'eau et/ou à la vapeur d'eau, formée à partir d'une émulsion aqueuse d'oxyde de cire naturelle selon l'une des revendications 1 à 12 précédentes.

17. Substrat contenant des polysaccharides ou des biopolymères selon la revendication 16, **caractérisé en ce que** le substrat contenant des polysaccharides ou des biopolymères est un substrat contenant de la cellulose, de préférence du papier ou du carton.

18. Procédé de fabrication d'un substrat contenant un polysaccharide ou un biopolymère selon l'une des revendications 16 à 17, comprenant les étapes suivantes

   a) application d'une émulsion aqueuse d'oxyde de cire naturelle selon l'une ou plusieurs des revendications 1 à 12 sur la surface du substrat contenant des polysaccharides ou des biopolymères
   b) séchage du substrat revêtu pour former la couche barrière.

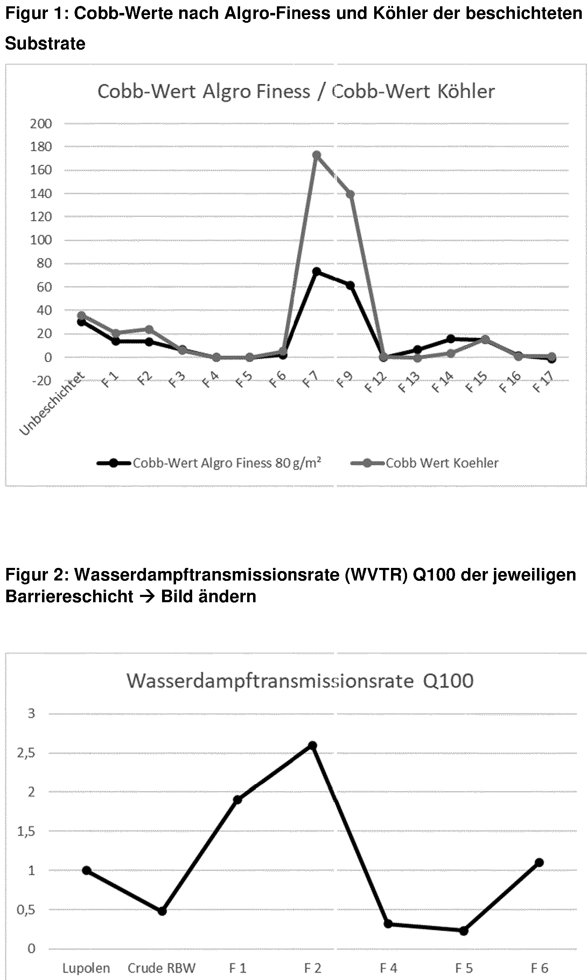

## Figur 1: Cobb-Werte nach Algro-Finess und Köhler der beschichteten Substrate

## Figur 2: Wasserdampftransmissionsrate (WVTR) Q100 der jeweiligen Barriereschicht → Bild ändern

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 3781485 A
- WO 2006137274 A
- WO 2007061592 A

- DE 102014001709 A
- US 2007068642 A1

### In der Beschreibung aufgeführte Nicht-Patentliteratur

- **HEINRICH et al.** *Powder Technology*, 2019, vol. 357, 223-231

- *B. Journal of the Society of Cosmetic Chemists*, 1954, vol. 5 (4), 249-256